# EUROPÄISCHE PATENTANMELDUNG

(11) **EP 4 850 831 A2**
(43) Veröffentlichungstag der Anmeldung: **09.12.2026**
(21) Anmeldenummer: 26199951.0
(22) Anmeldetag: 11.06.2024
(51) Int. Cl.: B22D 17/22

(54) **AUSWERFERSTIFT ZUM AUSWERFEN VON FORMTEILEN**

(30) Priorität: 13.06.2023 DE 202023103235 U
(62) Dokumentnummer(n) der früheren Anmeldung(en) nach Art. 76 EPÜ: 24732876.8 / 4 558 320
(71) Anmelder: KNARR Vertriebs GmbH, 95233 Helmbrechts (DE)
(72) Erfinder: Knarr, Rainer, 95233 Helmbrechts (DE)
(74) Vertreter: Samson & Partner Patentanwälte mbB

(57) **Zusammenfassung**

Die Erfindung betrifft Auswerferstifte zum Auswerfen von Formteilen aus Gießwerkzeugen. Die Auswerferstifte umfassen einen Schaft mit einer Schaftlängsachse, wobei der Schaft mindestens entlang eines Teilabschnitts eine oder mehrere Vertiefungen aufweist, dass die erste eine oder mehreren Vertiefungen sich im Wesentlichen helixförmig um die Schaftlängsachse erstreckt.

## Beschreibung

### Gebiet der Erfindung

Die vorliegende Erfindung bezieht sich allgemein auf Gießwerkzeuge, und beispielsweise auf einen Auswerferstift zum Auswerfen von Formteilen.

### Hintergrund der Erfindung

In der Spritz- und Druckgusstechnik (z.B. für die Formung von Kunststoffen und niedrigschmelzenden Metalllegierungen) stellt sich allgemein die Aufgabe, am Ende des Gießvorgangs das erstarrte Formteil aus der Gießform herauszunehmen. Hierzu dienen häufig ein oder mehrere Auswerferstifte, welche auf einer beweglichen Tragplatte angeordnet sind und jeweils durch eine Bohrung in die Gießform hineinreichen; üblicherweise schließen die Auswerferstifte bei nicht-betätigtem Auswerfer stirnseitig mit der Innenwandung der Gießform bündig ab.

Ein Auswerfen eines gegossenen Teils erfolgt nach Öffnen des Gießwerkzeugs dadurch, dass die Tragplatte mit dem oder den Auswerferstiften in Richtung zur Form bewegt wird, wodurch der oder die Auswerferstifte in die Form eindringen und so das Formteil auswerfen. Auswerferstifte sind beispielsweise aus EP 3 722 068 A1 oder DE 20 2004 018 293 U1 bekannt.

Der Schaft von Auswerferstiften ist dazu ausgelegt, in eine Bohrung oder Aussparung der Gießform eingeführt zu werden. Damit ist es möglich die Auswerferstifte in eine gewünschte Lage in die Gießform einzubringen, das gegossene Teil oder Formteil auszuwerfen und die Auswerferstifte daraus zu entnehmen. Vereinfacht ausgedrückt bilden die Auswerferstifte einen aus der Gießform einführbaren und entnehmbaren Körper, der beispielsweise schwimmend in der Gießform zumindest temporär gelagert ist. Insbesondere kann die Außenkontur des Auswerferstifts im Wesentlichen komplementär zu der Innenkontur der Gießform ausgestaltet sein, sodass im Wesentlichen ein Formschluss ermöglicht wird, wenngleich ein gewisser Hohlraum zwischen dem Auswerferstift, insbesondere dem Schaft des Auswerferstifts, und der Gießform, insbesondere einer Ausnehmung oder einer Bohrung der Gießform existieren kann.

Dies hat zur Folge, dass Luft, insbesondere während des Einbringens des Gießmaterials in den Formhohlraum, nicht oder nicht vollständig ausströmen oder entweichen kann. In weiterer Folge besteht dabei die Möglichkeit, dass unerwünschte Luft im Formteil verbleibt, und damit wird der Formhohlraum nicht durch das Gießmaterial, insbesondere im Bereich des Auswerferstifts, zur Gänze ausgefüllt. Dadurch verbleiben unerwünschte Fehlstellen im gegossenen Formteil.

Um unerwünschte Luft aus dem Formteil über den Hohlraum oder mittels des Hohlraumes zwischen Auswerferstift und der Gießform effektiver entweichen lassen zu können, kennt der Stand der Technik Auswerferstifte mit einer sogenannten Entlüftung.

Bei derartigen Auswerferstiften besteht jedoch ein Bedürfnis, dass sich kein Gießmaterial oder anderes unerwünschtes Material zwischen dem Schaft des Auswerferstifts und der Wandung der Gießform ansammelt. Wird in den Formhohlraum Gießmaterial eingebracht, so ist es möglich, dass nicht nur Luft, sondern auch Gießmaterial unerwünscht in den besagten Hohlraum gelangen. Dieser Effekt kann durch die Entlüftung bekannt aus dem Stand der Technik sogar verstärkt werden. In weiterer Folge kann dadurch die Gießform, insbesondere das Bohrloch, und/oder der Schaft des Auswerferstifts durch Gießmaterial verunreinigt werden. Diese Verunreinigung erhöht den Wartungs- und/oder Reinigungsaufwand in Bezug auf die Gießform, das Bohrloch und/oder den Schaft. Das impliziert insbesondere Stehzeiten in der Fertigung von Formteilen.

### Kurzbeschreibung der Erfindung

Es ist eine Aufgabe der vorliegenden Erfindung, die vorstehend beschriebenen Nachteile von vorbekannten Auswerferstiften zu vermeiden oder zu vermindern. Die Erfindung betrifft Vorrichtungen nach dem unabhängigen Anspruch 1. Die abhängigen Ansprüche betreffen bevorzugte Ausführungsformen.

Die Erfindung betrifft einen Auswerferstift zum Auswerfen eines Formteiles aus einem Gießwerkzeug, umfassend einen Schaft mit einer Schaftlängsachse. Der Schaft weist mindestens entlang eines Teilabschnitts eine oder mehrere Vertiefungen auf. Die eine oder mehreren Vertiefungen erstreckt bzw. erstrecken sich im Wesentlichen helixförmig um die Schaftlängsachse.

Der Schaft kann im Wesentlichen ein Rotationskörper sein. Beispielsweise kann der Schaft im Wesentlichen zylinderförmig oder im Wesentlichen kegelförmig sein. Der Schaft kann im Wesentlichen ein Extrusionskörper sein. Der Schaft kann im Wesentlichen pyramidenförmig sein. Der Schaft kann im Wesentlichen quaderförmig sein. Der Schaft kann im Wesentlichen rechteckförmig sein. Der Schaft kann im Wesentlichen paraboloidförmig sein.

Der Schaft kann einen oder mehrere Schaftabschnitte umfassen. In einem Fall mehrerer Schaftabschnitte können die mehreren Schaftabschnitte unterschiedliche Formen aufweisen. So kann ein Schaftabschnitt zylinderförmig, kegelförmig, kegelstumpfförmig oder konusförmig sein. Alternativ kann sich der mindestens eine Schaftabschnitt über die (gesamte) Länge des Schaftes erstrecken. Die mehreren Schaftabschnitte können jeweils miteinander verbunden oder angrenzend angeordnet oder beabstandet sein.

Der Schaft kann mindestens einen ersten, zweiten und dritten Schaftabschnitt umfassen, wobei der zweite Schaftabschnitt an einem Ende des ersten Schaftabschnitts angrenzt und an einem Ende des dritten Schaftabschnitts angrenzt. Der erste Schaftabschnitt ist im Wesentlichen zylinderförmig und weist einen ersten Durchmesser auf. Der dritte Schaftabschnitt ist im Wesentlichen zylinderförmig und weist einen dritten Durchmesser auf. Der zweite Schaftabschnitt ist im Wesentlichen kegelstumpfförmig oder konusförmig und der zweite Schaftabschnitt ist ausgelegt einen Übergang zwischen dem ersten Schaftabschnitt und den dritten Schaftabschnitt zu ermöglichen. Der Übergang kann ein stetiger oder kontinuierlicher Übergang sein. Einfach ausgedrückt, der zweite Schaftabschnitt weist bei dem stetigen oder kontinuierlichen Übergang keinen Sprung in einem Querschnitt des zweiten Schaftabschnitts auf. Mit anderen Worten, der zweite Schaftabschnitt weist einen vierten und fünften Durchmesser auf, wobei der vierte Durchmesser im Wesentlich dem ersten Durchmesser entspricht, der fünfte Durchmesser im Wesentlich dem dritten Durchmesser entspricht. Alternativ oder zusätzlich weist der zweite Schaftabschnitt einen Öffnungswinkel auf. Der Öffnungswinkel ist ausgelegt den Übergang oder steigen Übergang zu ermöglichen.

Das Verhältnis zwischen dem ersten Durchmesser und dem dritten Durchmesser kann beispielsweise zwischen 1,1 und 4, bevorzugt zwischen 1,5 und 2,5 betragen.

Die Schaftlängsachse erstreckt sich typischerweise entlang der Einführungsrichtung des Schafts im Betrieb. Sie kann eine Symmetrieachse des Schaftes sein. Die Schaftlängsachse kann mindestens eine Rotationsachse des Schafts sein. Die Schaftlängsachse kann (beispielweise analog zu der Stabstatik) eine Stabachse umfassen. Die Stabachse kann die Schwerachse des Schaftes umfassen. Die Stabachse kann eine Verbindungslinie der geometrischen Schwerpunkte oder der Massenmittelpunkte von Querschnitten des Schaftes umfassen. Der Schaft kann aus verschiedenen Materialien oder Materialzusammensetzungen bestehen. Der Schaft kann verschiedene Materialien oder Materialzusammensetzungen mit verschiedenen Materialfestigkeiten oder Härtegraden umfassen. Der Härtegrad kann eine Härte nach Rockwell (HR) sein. Der Härtegrad kann nach EN ISO 6508-1 bestimmt sein. Der Härtegrad kann in HRC bestimmt sein.

Der Auswerferstift kann ferner einen Kopf umfassen. Der Kopf kann an den Schaft angeformt sein. Der Kopf kann derart geformt sein, dass der Auswerferstift in einer komplementären Tragplatte nur in einer eindeutigen Einbauposition montierbar ist. Der Kopf kann eine Verdrehsicherung aufweisen, sodass der Auswerferstift bei Montage in einer komplementären Tragplatte verdrehsicher gelagert ist. Ferner kann der Kopf Vorzentrierungsmittel aufweisen. Der Kopf kann an seiner Unterseite eine Auflagefläche zur Auflage auf der Tragplatte umfassen. Der Kopf und der Schaft können verschiedene Materialfestigkeiten oder Härtegrade umfassen. Der Schaft kann eine höhere Materialfestigkeit oder Härtegrad umfassen als der Kopf.

Wie oben beschrieben, weist der Schaft mindestens entlang eines Teilabschnitts eine oder mehrere Vertiefungen auf. Insbesondere kann der Schaft mindestens entlang des Teilabschnitts eine Vertiefung aufweisen. Alternativ kann der Schaft mindestens entlang des Teilabschnitts mehrere Vertiefungen aufweisen.

Der Teilabschnitt kann ein Abschnitt oder Ausschnitt des Schafts in Schaftlängsrichtung sein. Der Teilabschnitt kann - bis auf die Vertiefung - im Wesentlichen zylinderförmig sein. Der Teilabschnitt kann an einem Ende des Schaftes, insbesondere einem vom Kopf des Auswerferstifts abgewandten Ende, angrenzend sein.

Der Schaft ist dazu ausgelegt, zur Anpassung an die Gießform vom freien Ende her gekürzt zu werden. In manchen Ausführungsformen erstreckt sich der Teilabschnitt über eine Länge, die 50% bis 80% der Schaftlänge ausmacht, bevorzugt zwischen 59% und 69%. Dies erlaubt, dass auch nach Kürzung des Schafts der verbleibende Teilabschnitt etwa die Hälfte (bspw. zwischen 45% und 55 %) der verbleibenden Schaftlänge ausmachen kann.

Der Teilabschnitt kann einen oder mehrere Teilabschnitte umfassen. Im Falle von mehreren Teilabschnitten können diese verbunden, benachbart oder voneinander beabstandet sein.

Wie oben beschrieben erstreckt bzw. erstrecken sich die eine oder mehreren Vertiefungen im Wesentlichen helixförmig um die Schaftlängsachse. Helixförmig kann schraub(en)linienförmig sein. Helixförmig kann wendelförmig sein. Im Falle eines zylinderförmigen Schafts kann die Helixform durch eine Kurve beschrieben werden, die sich mit konstanter Steigung um den Mantel des Zylinders windet. Wie dem Fachmann bekannt ist, kann eine Helix durch ihre Ganghöhe (diejenige Strecke in Zylinderachsenrichtung, um die sich die Helix wie eine Schraube bei einer vollen Umdrehung entlang der Zylinderachse windet), ihren Steigungswinkel (auch Gangwinkel) oder ihre Steigung (bei Abwickeln des Zylindermantels mit Helix in eine Ebene erhält man eine Gerade mit der betreffenden Steigung) beschrieben werden.

Die eine oder mehreren Vertiefungen kann/können sich entlang einer im Wesentlichen helixförmigen oder schraublinienförmigen oder wendelförmigen Strecke erstrecken. Die Strecke kann sich entlang einer Schaftoberfläche erstrecken. Die Strecke kann sich entlang des Teilabschnittes erstrecken. Die Strecke kann von dem Teilabschnitt oder von einer Schaftoberfläche beabstandet sein. Der Teilabschnitt kann eine Schaftoberfläche sein.

Die eine oder mehrere Vertiefungen kann durch Entfernen oder Abtragen von Material von einer Urform des Schaftes resultieren, bspw. durch Schleifen. Mit Urform des Schaftes kann jene Form des Schafts ohne Vertiefung(en) bezeichnet werden. Die eine oder mehrere Vertiefungen kann eine oder mehrere Einkerbungen sein. Die eine oder mehrere Vertiefungen kann/können im Schleifverfahren gefertigt werden. Die eine oder mehreren Vertiefungen kann mit der Herstellung des Schaftes erfolgen. Die Vertiefung kann entlang des Teilabschnitts eine im Wesentlichen konstante Form oder Querschnitt aufweisen. Die eine oder mehreren Vertiefungen kann mindestens einen Querschnitt umfassen.

Der Querschnitt ist bevorzugt in einer Normalenebene der Strecke oder einer Normalenebene der Schaftlängsrichtung orientiert. Der Querschnitt kann senkrecht zur Schaftlängsachse oder zur Strecke orientiert sein.

Die Helixform der einen oder mehreren Vertiefungen kann einen Steigungswinkel haben bzw. aufweisen. Im Falle von mehreren Vertiefungen können diese mehreren Vertiefungen einen gleichen Steigungswinkel aufweisen. Alternativ können die mehreren Vertiefungen jeweils einen unterschiedlichen Steigungswinkel aufweisen. Bevorzugt ist der Steigungswinkel für die eine oder mehreren Vertiefungen entlang der Schaftlängsachse konstant. Alternativ kann der Steigungswinkel abschnittsweise konstant sein und/oder eine Abhängigkeit entlang der Schaftlängsachse aufweisen.

Die Helixform jeder Vertiefung weist bevorzugt eine Ganghöhe und/oder eine Steigung auf. Die Ganghöhe kann größer als, identisch zu oder kleiner als die Länge des Teilabschnitts sein.

Im Falle von mehreren Vertiefungen können diese zueinander beabstandet angeordnet sein. Die Beabstandung kann sich über mindestens einen Teil des Teilabschnittes erstrecken. Die Beabstandung kann sich über den Teilabschnitt erstrecken.

In manchen Ausführungsformen kann/können die eine oder mehreren Vertiefungen im Wesentlichen konkavförmig in Bezug auf einen zur Schaftlängsachse senkrecht verlaufenden Querschnitt ausgestaltet sein. Die eine oder mehreren Vertiefungen kann im Wesentlichen abschnittsweise konkavförmig in Bezug auf einen zur Schaftlängsachse senkrecht verlaufenden Querschnitt ausgestaltet sein.

In anderen Ausführungsformen kann/können die eine oder mehreren Vertiefungen im Wesentlichen planar oder geradlinig in Bezug auf einen zur Schaftlängsachse senkrecht verlaufenden Querschnitt ausgestaltet sein. Die eine oder mehrere Vertiefungen kann im Wesentlichen abschnittsweise planar oder geradlinig in Bezug auf einen zur Schaftlängsachse senkrecht verlaufenden Querschnitt ausgestaltet sein.

Eine Vertiefung der einen oder mehreren Vertiefungen kann abschnittsweise planar oder geradlinig in Bezug auf einen zur Schaftlängsachse senkrecht verlaufenden Querschnitt ausgestaltet sein und abschnittsweise konkavförmig in Bezug auf einen zur Schaftlängsachse senkrecht verlaufenden Querschnitt umfassen. Mindestens eine Vertiefung der mehreren Vertiefungen kann im Wesentlichen planar oder geradlinig in Bezug auf einen zur Schaftlängsachse senkrecht verlaufenden Querschnitt sein. Mindestens eine andere Vertiefung der mehreren Vertiefungen kann im Wesentlichen konkavförmig in Bezug auf einen zur Schaftlängsachse senkrecht verlaufenden Querschnitt sein.

Die Konkavform kann im Wesentlichen eine Kreisbogenform oder eine Parabelform sein oder umfassen.

Die Kreisbogenform kann einen Radius von zwischen 20 und 30 mm haben oder darstellen. Die Kreisbogenform kann einen Radius umfassen. Das Verhältnis zwischen dem Radius und einem Radius des Schaftes kann beispielsweise zwischen 4 und 26, bevorzugt zwischen 10 und 20 betragen.

Die eine oder mehreren Vertiefungen kann eine Vertiefung gegenüber einer Urform des Schaftes ohne die Vertiefung zwischen 0,01 mm und 0,03 mm darstellen. Die eine oder mehreren Vertiefungen kann eine Vertiefung (am tiefsten Punkt) gegenüber einer Urform des Schaftes ohne die Vertiefung von etwa 0,02 mm darstellen. Die eine oder mehreren Vertiefungen kann eine Vertiefung gegenüber einer Urform des Schaftes ohne die Vertiefung zwischen 0,02 mm ± 0,003 mm darstellen. Bevorzugt ist die Genauigkeit der Vertiefung (in radialer Richtung entlang des Schaftradius) kleiner als 5 µm. Durch Verwendung von Schleifverfahren kann derartige Genauigkeit über die Länge des Teilabschnitts erreicht werden. Dies trägt weiter zu einer Vermeidung von Verunreinigungen und Erhöhung des Selbstreinigungs-Effekts bei.

Die eine oder mehreren Vertiefungen kann eine Vertiefung gegenüber einer Urform des Schaftes ohne die Vertiefung von zwischen 0,1% und 2,0 % des Radius des Schaftes darstellen oder umfassen.

Die eine oder mehreren Vertiefungen kann eine Mehrzahl an Vertiefungen sein. Insbesondere können diese mehreren Vertiefungen eine ungerade Anzahl an Vertiefungen sein. Dies erlaubt - bei gleichmäßiger Verteilung der Vertiefung um den Schaftumfang - dass nicht zwei Vertiefungen sich gegenüberliegen in Bezug auf den Schaftumfang. Insbesondere kann es sich um 3, 5 oder 7 Vertiefungen handeln.

Vertiefungen der Mehrzahl an Vertiefungen können einen gleichen Steigungswinkel aufweisen oder umfassen.

Die Mehrzahl an Vertiefungen können mehrere Steigungswinkel aufweisen. Mindestens eine erste Vertiefung der Mehrzahl an Vertiefungen kann einen ersten Steigungswinkel aufweisen. Mindestens eine zweite Vertiefung der Mehrzahl an Vertiefungen kann einen zweiten Steigungswinkel aufweisen, welcher nicht identisch ist zu dem ersten Steigungswinkel. Dies erlaubt, dass sich die Helizes schneiden können und erlaubt eine weiter erhöhte Entlüftungsleistung.

Der erste und zweite Steigungswinkel können sich im Vorzeichen und/oder Betrag unterscheiden. Die Helizes mit erstem und zweitem Steigungswinkel können gleiche Helizität (d.h. Steigungswinkel mit gleichem Vorzeichen) oder gegenläufige Helizität (d.h. Steigungswinkel mit ungleichem Vorzeichen) aufweisen. Der Betrag oder der absolute Wert des ersten Steigungswinkels kann identisch zu oder unterschiedlich von dem Betrag oder dem absoluten Wert des zweiten Steigungswinkels sein.

Der erste Steigungswinkel kann ein Vielfaches des zweiten Steigungswinkels sein. Das Vielfache kann im Wesentlichen ein ganzzahliges Vielfaches sein. Das im Wesentlichen ganzzahlige Vielfache kann gerundet zwei, drei oder vier sein. Das im Wesentlichen ganzzahlige Vielfache kann zwei, drei oder vier sein.

Der Schaft kann ferner eine Beschichtung des Schaftes umfassen. Der Schaft kann ferner eine Beschichtung des Teilabschnittes umfassen. Die Beschichtung kann eine reibungsarme Beschichtung sein. Die Beschichtung kann einen Reibungswert zwischen 0,1 und 0,15 umfassen.

Die Beschichtung kann eine Kohlenstoffschicht umfassen. Die Beschichtung kann eine amorphe Kohlenstoffschicht, insbesondere eine diamond-like carbon, DLC, Schicht umfassen. Dies erlaubt eine wartungsfreie oder -arme Verwendung des Auswerferstifts.

Der Schaft kann ferner eine Stirnfläche umfassen, wobei die Stirnfläche eine Form des Formteiles oder der Gießform abbildet. Die Stirnfläche kann senkrecht oder geneigt zu der Schaflängsrichtung sein.

Der Schaft kann ferner eine oder mehrere umlaufende Rillen umfassen. Dies kann weiter zu einer Vermeidung von Verunreinigungen und Erhöhung des Selbstreinigungs-Effekts beitragen.

Die Rille kann beispielsweise im Wesentlichen in einer Ebene senkrecht zur Schaftlängsachse erstreckt oder orientiert sein. Alternativ oder zusätzlich kann die Rille tangential entlang des Umfangsabschnittes des Schaftes erstreckt oder orientiert sein.

Die Rille kann beispielsweise an einem Ende eines Teilabschnittes angeordnet sein. Eine Rille kann zwischen zwei Teilabschnitten verortet sein. Eine Rille kann zwischen zwei Teilabschnitten verortet sein und die Rille kann mit einem Ende eines ersten Teilabschnittes und mit einem Ende eines zweiten Teilabschnittes verbunden sein. In einem Fall mehrerer Rillen, können diese zueinander jeweils verbunden, benachbart oder voneinander beabstandet sein. Alternativ oder zusätzlich, kann die Rille mit mindestens einer Vertiefung verbunden, benachbart oder voneinander beabstandet sein.

Die Rille kann ausgelegt sein, mit mindestens einer der genannten Vertiefungen eine Fluidverbindung aufzuweisen. Eine Rille kann ausgelegt sein zwischen oder mit mindestens einer Vertiefung eines ersten Teilabschnittes eine Fluidverbindung aufzuweisen. Eine Rille kann ausgelegt sein eine Fluidverbindung zwischen mindestens einer Vertiefung eines ersten Teilabschnittes und mindestens einer Vertiefung eines zweiten Teilabschnittes aufzuweisen.

Die Rille kann abschnittsweise planar oder geradlinig in Bezug auf einen zur Schaftlängsachse parallel verlaufenden Querschnitt ausgestaltet sein. Alternativ kann sie abschnittsweise konkavförmig in Bezug auf einen zur Schaftlängsachse parallel verlaufenden Querschnitt umfassen.

Die Konkavform der Rille kann im Wesentlichen eine Kreisbogenform oder eine Ellipsenform oder eine Parabelform sein oder umfassen.

Die Kreisbogenform der Rille kann einen Radius aufweisen, beispielsweise einen Radius zwischen 1 mm und 2 mm.

Eine Rille kann eine Tiefe gegenüber einer Urform des Schaftes ohne die Rille zwischen 0,02 mm und 0,3 mm aufweisen. Die Rille kann eine Tiefe (am tiefsten Punkt) gegenüber einer Urform des Schaftes ohne die Rille von etwa 2 bis 10 mal so tief wie die oben beschriebenen Vertiefungen darstellen.

Die Erfindung betrifft des Weiteren eine Auswerferstift-Anordnung zur Verwendung mit einer Gießform, die Anordnung umfassend mindestens einen erfindungsgemäßen Auswerferstift, eine Tragplatte, die dazu ausgelegt ist, den Auswerferstift in einer Bohrung aufzunehmen. Die Auswerferstift-Anordnung kann ferner dazu ausgelegt sein, eine Fluidverbindung zwischen der Bohrung und der Gießform aufzuweisen. Die Fluidverbindung kann eine Luftverbindung sein. Das Fluid kann Luft und/oder Gießmaterial sein.

Der Formhohlraum kann zumindest teilweise eine Negativform einer Form abbilden. Der Formhohlraum kann an den Auswerferstift angrenzen. Der Formhohlraum kann zumindest teilweise durch den Auswerferstift begrenzt sein.

Der Hohlraum kann ferner ausgelegt sein, dass der Auswerferstift zumindest teilweise bewegbar sein kann. Der Hohlraum kann ausgelegt sein, dass der Auswerferstift zumindest in einem Abschnitt des Hohlraumes zumindest teilweise bewegbar sein kann. Die Bewegbarkeit kann eine translatorische Bewegbarkeit sein. Die Bewegbarkeit kann eine rotatorische Bewegbarkeit sein. Die Bewegbarkeit kann eine translatorische und eine rotatorische Bewegbarkeit sein.

Die Auswerferstift-Anordnung kann ferner zumindest eine Formhälfte umfassen. Die Formhälfte kann zumindest teilweise den Formhohlraum abbilden.

Die zumindest eine Formhälfte kann eine Durchgangsbohrung umfassen. Die Durchgangsbohrung kann den Hohlraum umfassen.

Erfindungsgemäße Auswerferstifte sind bevorzugt kompatibel mit anderen Auswerferstiften. Dies erlaubt, dass der hier offenbarte Auswerferstift oder Schaft ohne Anpassung der Tragplatte oder der Gießform verwendet werden kann.

Der erfindungsgemäße Auswerferstift mit einer um den Schaftumfang umlaufenden Helix erlaubt eine gleichmäßige Verteilung der Belastung (bspw. durch Reibung zwischen Schaft und Bohrungsinnenwand) um den Schaftumfang, sodass eine etwaige Abnutzung gleichmäßig erfolgen kann. Des Weiteren erlaubt der erfindungsgemäße Auswerferstift, dass die genannte Verunreinigung, insbesondere die Verunreinigung durch unerwünschtes Füll- oder Gießmaterial in der Vertiefung durch die Helixform der Vertiefung reduziert oder vermieden wird. Mit anderen Worten, hat die im Wesentlichen helixförmige Vertiefung eine Selbstreinigungswirkung gegenüber konventionellen Entlüftungen: Wird der Auswerferstift aus der Gießform durch (im Wesentlichen entlang der Schaftlängsachse translatorische) Bewegung entnommen, wird die Verunreinigung, insbesondere das unerwünschte Füll- oder Gießmaterial, zwischen Auswerferstift und Gießform, insbesondere der Bohrung, durch die im Wesentlichen helixförmige Vertiefung mitgenommen. Damit erfolgt die gewisse Selbstreinigung des Hohlraumes.

### Beschreibung von Ausführungsbeispielen

Nachfolgend werden Ausführungsbeispiele der Erfindung unter Bezugnahme auf Figuren näher beschrieben, wobei
Figur 1 einen Auswerferstift gemäß einer Ausführungsform;
Figur 2 einen Auswerferstift gemäß einer Ausführungsform;
Figur 3 einen Auswerferstift gemäß einer Ausführungsform;
Figur 4 einen Auswerferstift gemäß einer Ausführungsform;
Figur 5 einen Auswerferstift gemäß einer Ausführungsform;
Figur 6 einen Auswerferstift gemäß einer Ausführungsform;
Figur 7 einen Auswerferstift gemäß einer Ausführungsform;
Figur 8 einen Schaft eines Auswerferstifts gemäß einer Ausführungsform; und
Figur 9 einen Auswerferstift gemäß einer Ausführungsform zeigt.

In der folgenden Beschreibung der Ausführungsbeispiele können gleiche oder ähnliche Komponenten gleiche oder korrespondierende Bezugszeichen haben.

Mit "kann" oder "können" werden insbesondere ein optionales Merkmal oder optimale Merkmale der Erfindung bezeichnet. Demzufolge gibt es jeweils ein Ausführungsbeispiel oder eine Offenbarung der Erfindung, das oder die das jeweilige Merkmal oder die jeweiligen Merkmale aufweist. Dieses Ausführungsbeispiel oder diese Offenbarung kann mit den vor- oder nachstehenden anderen Ausführungsbeispielen oder Offenbarungen in beliebiger Weise kombiniert, variiert oder permutiert werden.

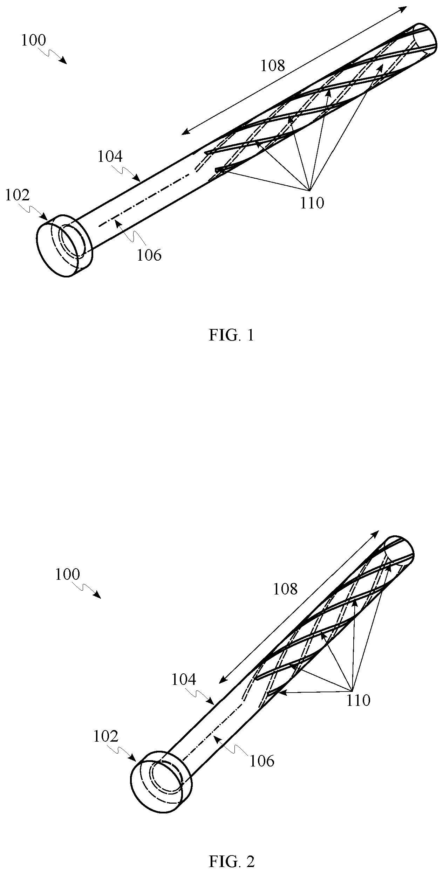

Figur 1 zeigt eine Ansicht eines Ausführungsbeispiels eines Auswerferstifts 100 zum Auswerfen eines Formteiles aus einem Gießwerkzeug. Der Auswerferstift 100 umfasst einen Kopf 102 und einen Schaft 104. Der Kopf 102 und der Schaft 104 sind jeweils im Wesentlichen zylinderförmig. In einem anderen Ausführungsbeispiel ist der Kopf 102 an den Schaft 104 angeformt.

Der Schaft 104 umfasst eine Schaftlängsachse 106. Die Schaftlängsachse 106 ist in diesem Ausführungsbeispiel eine Symmetrieachse des im Wesentlichen zylinderförmigen Schaftes 104.

Der Schaft 104 umfasst zwei planare Enden. Die beiden planaren Enden sind rechtwinklig zu der Schaftlängsachse 106 angeordnet. Ein erstes Ende grenzt an den Kopf 102 oder wird durch den Kopf 102 begrenzt. Das andere (zweite) Ende ist ein freies Ende. Das freie Ende kann in einem anderen Ausführungsbeispiel mit dem Formteil übereinstimmen. Das freie Ende kann in einem anderen Ausführungsbeispiel mit einer Form des Formteils im Wesentlichen übereinstimmen.

Der Schaft 104 umfasst ferner einen Teilabschnitt 108. Der Teilabschnitt 108 erstreckt sich von dem freien Ende in Richtung des kopfseitigen (ersten) Endes des Schaftes. Der Teilabschnitt 108 ist in diesem Ausführungsbeispiel im Wesentlichen zylinderförmig. In einem anderen Ausführungsbeispiel kann der Teilabschnitt 108 ein Ausschnitt oder Abschnitt eines Zylinders umfassen. Der Teilabschnitt 108 ist ein zusammenhängender Teilabschnitt des Schaftes 104.

Der Schaft 104 weist ferner mehrere Vertiefungen 110 auf. Die mehreren Vertiefungen 110 erstrecken sich im Wesentlichen helixförmig um die Schaftlängsachse Die mehreren Vertiefungen 110 umfassen in diesem Ausführungsbeispiel eine Anzahl von fünf im Wesentlichen helixförmigen Vertiefungen. Die mehreren Vertiefungen 110 weisen einen gleichen Steigungswinkel auf. Dies hat zur Folge, dass sich die mehreren Vertiefungen 110 nicht überschneiden, sondern parallel verlaufen.

Ferner sind im gezeigten Beispiel die mehreren Vertiefungen 110 gleichmäßig innerhalb des Teilabschnittes 108 beabstandet: In Bezug auf den Umfang des Schafts sind sie in gleichen Winkelabständen (je ein Fünftel des Gesamtumfangs, d.h. 360°/5 = 72°) zueinander angeordnet. In Bezug auf die Schaftlängenachse sind sie in gleichen Ganghöhenunterschieden (versetzt um je ein Fünftel der Ganghöhe jeder Helix) zueinander angeordnet.

Figur 2 zeigt eine weitere Ansicht des Ausführungsbeispiels des Auswerferstifts 100.

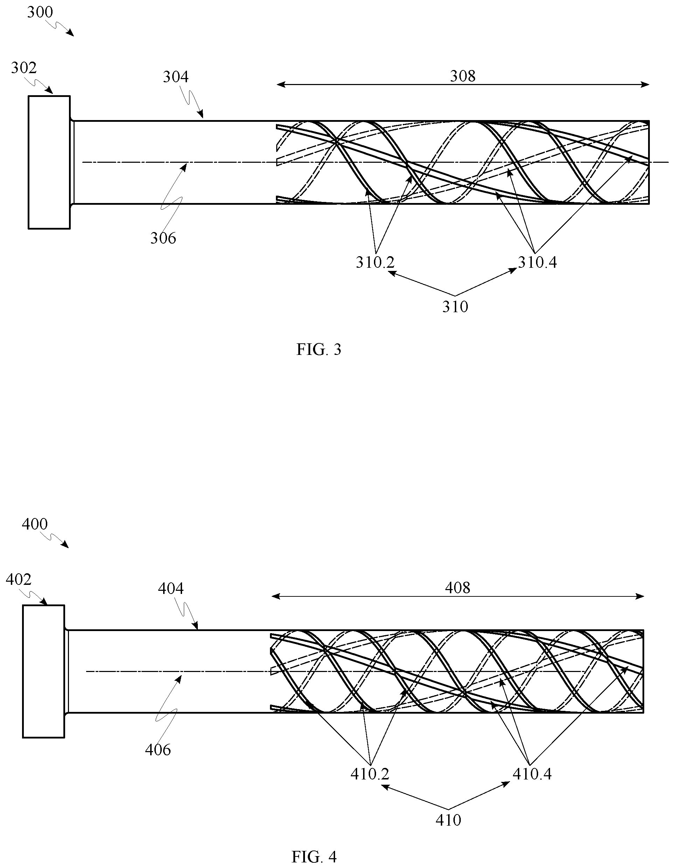

Figur 3 zeigt eine Ansicht eines weiteren Ausführungsbeispiels des Auswerferstifts 300 zum Auswerfen eines Formteiles aus einem Gießwerkzeug. Der Auswerferstift 300 umfasst einen Kopf 302, einen Schaft 304 mit einer Schaftlängsachse 306, wobei der Schaft mindestens entlang eines Teilabschnitts 308 mehrere Vertiefungen 310 aufweist, die sich im Wesentlichen helixförmig um die Schaftlängsachse erstrecken.

Die mehreren Vertiefungen 310 sind oder umfassen in diesem Ausführungsbeispiel eine erste Mehrzahl 310.2 und eine zweite Mehrzahl 310.4 an Vertiefungen. Die erste Mehrzahl an Vertiefungen 310.2 ist eine Anzahl von zwei im Wesentlichen helixförmigen Vertiefungen. Die zweite Mehrzahl an Vertiefungen 310.4 ist eine Anzahl von drei im Wesentlichen helixförmigen Vertiefungen. Die Vertiefungen der ersten Mehrzahl an Vertiefungen 310.2 weisen einen ersten Steigungswinkel auf, d.h. sie verlaufen zueinander parallel. Die Vertiefungen der zweiten Mehrzahl an Vertiefungen 310.4 weisen einen zweiten Steigungswinkel auf, d.h. sie verlaufen zueinander parallel.

In diesem Ausführungsbeispiel unterscheiden sich der erste Steigungswinkel und der zweite Steigungswinkel, sodass sich die Helizes der ersten Mehrzahl an Vertiefungen 310.2 und die Helizes der zweiten Mehrzahl an Vertiefungen 310.4 schneiden.

Die Vertiefungen der ersten Mehrzahl an Vertiefungen 310.2 sind nicht gleichmäßig beabstandet angeordnet (sondern in unterschiedlichen Winkelabständen entlang des Umfangs bzw. Ganghöhen entlang der Schaftachse versetzt). Die Vertiefungen der zweiten Mehrzahl an Vertiefungen 310.4 sind gleichmäßig beabstandet angeordnet (d.h. in gleichen Winkelabständen von jeweils einer Drittel Umdrehung entlang des Umfangs versetzt).

Figur 4 zeigt eine Ansicht eines weiteren Ausführungsbeispiels des Auswerferstifts 400 zum Auswerfen eines Formteiles aus einem Gießwerkzeug. Der Auswerferstift 400 umfasst einen Kopf 402, einen Schaft 404 mit einer Schaftlängsachse 406, wobei der Schaft mindestens entlang eines Teilabschnitts 408 mehrere Vertiefungen 410 aufweist, die sich im Wesentlichen helixförmig um die Schaftlängsachse erstrecken.

Die mehreren Vertiefungen 410 sind in diesem Ausführungsbeispiel eine erste Mehrzahl 410.2 und eine zweite Mehrzahl 410.4 an Vertiefungen.

Die erste Mehrzahl 410.2 ist eine Anzahl von drei im Wesentlichen helixförmigen Vertiefungen. Die Vertiefungen der ersten Mehrzahl an Vertiefungen 410.2 weisen einen ersten Steigungswinkel auf. Die Vertiefungen der ersten Mehrzahl an Vertiefungen 410.2 sind voneinander gleichmäßig (also in gleichen Winkelabständen entlang des Umfangs bzw. Ganghöhen entlang der Schaftachse versetzt) beabstandet.

Die zweite Mehrzahl 410.4 ist eine Anzahl von drei im Wesentlichen helixförmigen Vertiefungen. Die Vertiefungen der zweiten Mehrzahl an Vertiefungen 410.4 weisen einen zweiten Steigungswinkel auf. Die Vertiefungen der zweiten Mehrzahl an Vertiefungen 310.4 sind voneinander gleichmäßig (also in gleichen Winkelabständen entlang des Umfangs bzw. Ganghöhen entlang der Schaftachse versetzt) beabstandet.

Das Ausführungsbeispiels des Auswerferstifts 400 gemäß Figur 4 unterscheidet sich vom Ausführungsbeispiel des Auswerferstifts 300 gemäß Figur 3 durch unterschiedliche Vertiefungen, insbesondere durch die gleichmäßige Beabstandung der ersten Anzahl von Vertiefungen.

Am Ende des Teilabschnitts 408, das im Wesentlichem dem freien Ende des Schaftes 406 entspricht, sind jeweils eine Vertiefung der ersten Mehrzahl 410.2 und eine Vertiefung der zweiten Mehrzahl 410.4 an Vertiefungen gegenüberliegend angeordnet oder verortet. Mit gegenüberliegend angeordnet oder verortet ist zu verstehen, dass jeweils eine Vertiefung der ersten Mehrzahl 410.2 gegenüber einer Vertiefung der zweiten Mehrzahl 410.4 an Vertiefungen um 180° verschoben oder gedreht mit der Schaftlängsachse 706 als Drehachse ist. Ferner sind an dem Ende des Teilabschnitts 408 die erste Mehrzahl 410.2 und die zweite Mehrzahl 410.4 an Vertiefungen gleichmäßig über oder entlang des Teilabschnitts 408 angeordnet. Mit anderen Worten, an dem Ende des Teilabschnitts 408 sind die erste Mehrzahl 410.2 und die zweite Mehrzahl 410.4 an Vertiefungen gleichmäßig entlang des Umfangs oder des Querschnitts des Schaftes angeordnet oder verteilt. Damit kann eine gleichmäßige Entlüftung über den Querschnitt des Schaftes realisiert werden.

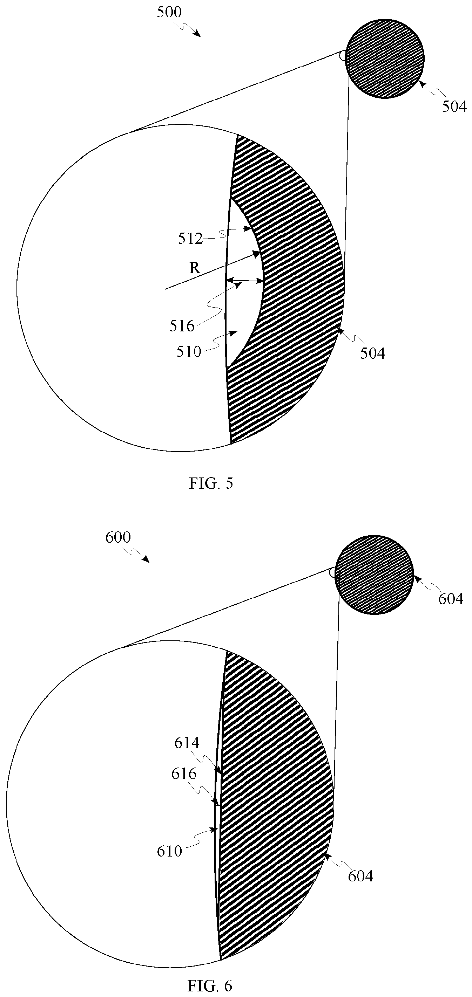

Figur 5 zeigt ein Schnittbild eines Ausführungsbeispiels eines Schaftes 504 mit teilweisem Vergrößerungsausschnitt. Der Schaft 504 ist ein Schaft eines in den zuvor beschriebenen Ausführungsbeispielen. Das Schnittbild in Figur 5 zeigt einen Querschnitt des im Wesentlichen zylinderförmig Schaftes 504 normal zur Schaftlängsachse. Mit anderen Worten zeigt das Schnittbild einen zur Schaftlängsachse senkrecht verlaufenden Querschnitt des Schaftes 504. Der Schaft 504 ist daher als im Wesentlichen kreisrunder Querschnitt dargestellt.

Die Figur 5 zeigt ferner ein Detail des Schaftes 504 an dessen in der Darstellung linken Umfangs. Der Schaft umfasst eine Vertiefung 510. Die Vertiefung 510 kann eine Vertiefung der mehreren Vertiefungen aus den vorangegangen Ausführungsbeispielen sein.

Die Vertiefung 510 umfasst eine Vertiefung 516 gegenüber einer Urform des Schaftes ohne die Vertiefung. In diesem Ausführungsbeispiel ist die Vertiefung 510 im Wesentlichen konkavförmig. Die Konkavform ist im Wesentlichen eine Kreisbogenform 512, wobei die Kreisbogenform einen Radius R umfasst.

Figur 6 zeigt ein Schnittbild eines weiteren Ausführungsbeispiels eines Schaftes 604. Der Schaft 604 kann ein Schaft in den zuvor genannten Ausführungsbeispielen sein. Der Schaft 604 ist im Wesentlichen zylinderförmig. Das Schnittbild in Figur 6 zeigt einen Querschnitt des Wesentlichen zylinderförmig Schaftes 604 normal zur Schaftlängsachse. Mit anderen Worten zeigt das Schnittbild einen zur Schaftlängsachse senkrecht verlaufenden Querschnitt des Schaftes 604.

Die Figur 6 zeigt ferner ein Detail des Schaftes 604. Der Schaft umfasst eine Vertiefung 610. In diesem Ausführungsbeispiel ist die Vertiefung 610 im Wesentlichen planar oder geradlinig, 614, ausgestaltet oder beschaffen. Die Vertiefung 610 umfasst eine Vertiefung 616 gegenüber einer Urform des Schaftes ohne die Vertiefung.

Der Schaft 600 unterscheidet sich vom Schaft 500 insbesondere durch eine Ausgestaltung der Vertiefung. Der Schaft 500 umfasst eine im Wesentlichen konkavförmige Vertiefung. Der Schaft 600 umfasst eine im Wesentlichen planare oder geradlinige Vertiefung.

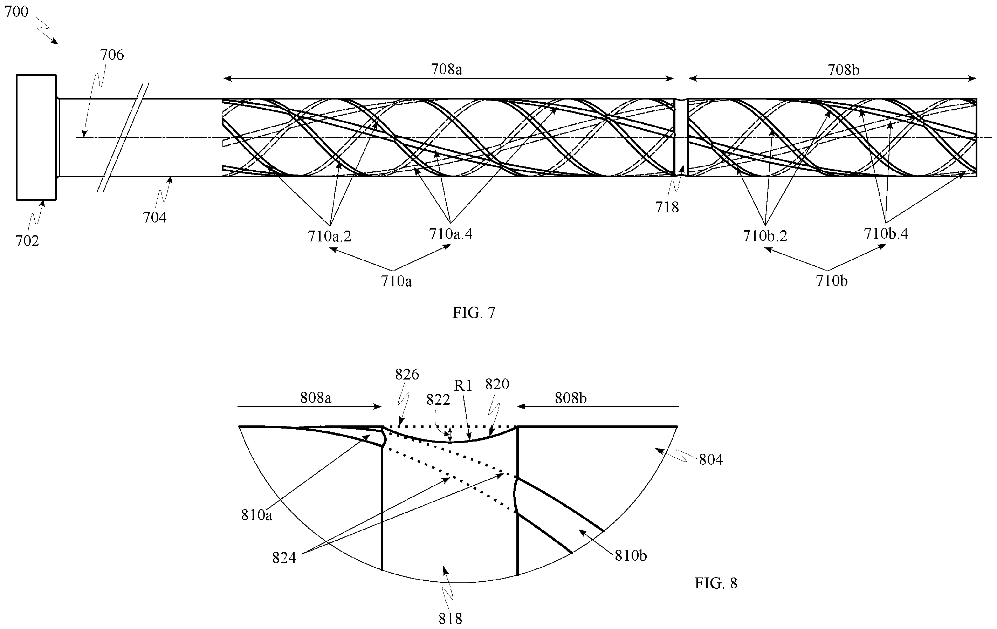

Figur 7 zeigt eine Ansicht eines weiteren Ausführungsbeispiels des Auswerferstifts 700 zum Auswerfen eines Formteiles aus einem Gießwerkzeug. Der Auswerferstift 700 umfasst einen Kopf 702, einen Schaft 704 mit einer Schaftlängsachse 706. Der Schaft 704 umfasst zwei planare Enden. Die beiden planaren Enden sind rechtwinklig zu der Schaftlängsachse 706 angeordnet. Ein erstes Ende grenzt an den Kopf 702 oder wird durch den Kopf 702 begrenzt. Das andere (zweite) Ende ist ein freies Ende. Das freie Ende kann in einem anderen Ausführungsbeispiel mit dem Formteil übereinstimmen. Das freie Ende kann in einem anderen Ausführungsbeispiel mit einer Form des Formteils im Wesentlichen übereinstimmen. In einem Ausführungsbeispiel ist der Kopf 702, der Schaft 704 und die Schaftlängsachse 706 ein Kopf, ein Schaft und eine Schaftlängsachse aus einem vorstehendem Ausführungsbeispiel.

Der Schaft 704 umfasst ferner einen ersten Teilabschnitt 708a und einen zweiten Teilabschnitt 708b. Der zweite Teilabschnitt 708b erstreckt sich von dem freien Ende in Richtung des kopfseitigen (ersten) Endes des Schaftes. Der erste Teilabschnitt 708a und der zweite Teilabschnitt 708b sind voneinander beabstandet.

Der Schaft 704 weist mindestens entlang des ersten Teilabschnitts 708a mehrere Vertiefungen 710a auf, die sich im Wesentlichen helixförmig um die Schaftlängsachse 706 erstrecken. Die mehreren Vertiefungen 710a sind in diesem Ausführungsbeispiel eine erste Mehrzahl 710a.2 und eine zweite Mehrzahl 710a.4 an Vertiefungen. Beispielsweise entsprechen die mehreren Vertiefungen 710a mehreren Vertiefungen aus einem vorstehenden Ausführungsbeispiel, insbesondere den mehreren Vertiefungen 410 gezeigt in Figur 4.

Der Schaft 704 weist mindestens entlang des zweiten Teilabschnitts 708b mehrere Vertiefungen 710b auf, die sich im Wesentlichen helixförmig um die Schaftlängsachse 706 erstrecken. Die mehreren Vertiefungen 710b sind in diesem Ausführungsbeispiel eine erste Mehrzahl 710b.2 und eine zweite Mehrzahl 710b.4 an Vertiefungen In einem Ausführungsbeispiel entsprechen die mehreren Vertiefungen 710b mehrere Vertiefungen aus einem vorstehenden Ausführungsbeispiel, insbesondere den mehreren Vertiefungen 410 gezeigt in Figur 4.

Der Schaft 704 umfasst ferner eine Rille 718. Die Rille 718 ist innerhalb der Beabstandung des ersten Teilabschnitts 708a und des zweiten Teilabschnitts 708b verortet. Mit anderen Worten, ein Ende des ersten Teilabschnitts 708a und ein Ende des zweiten Teilabschnitts 708b grenzt an die Rille. Ferner grenzt ein Ende der mehreren Vertiefungen 710b und ein Ende der mehreren Vertiefungen 710a an die Rille 718 an. Im dargestellten Beispiel befindet sich die Position der Rille 718 entlang der Schaftachse etwa bei 75% der Gesamtlänge vom Schaftkopf aus betrachtet. Im Allgemeinen befindet sich die Rille bevorzugt in einem Bereich von 60% bis 75% der Schaftlänge. Dies erlaubt ein gewisses Kürzen des Schafts, sodass auch der gekürzte Schaft die Rille aufweist.

Die Rille 718 erstreckt sich Wesentlichen in einer Ebene senkrecht zur Schaftlängsachse 706 und geradlinig entlang des Umfangs des Schaftes 706.

In diesem Ausführungsbeispiel ist eine Anzahl der ersten Mehrzahl 710b.2 und eine Anzahl der ersten Mehrzahl 710a.2 gleich. Ferner ist ein Steigungswinkel der ersten Mehrzahl 710b.2 der helixförmigen Vertiefungen und ein Steigungswinkel der ersten Mehrzahl 710a.2 der helixförmigen Vertiefungen gleich.

Ferner sind die mehreren Vertiefungen 710a und die mehreren Vertiefungen 710b derart relativ zueinander angeordnet, dass die mehreren Vertiefungen 710a und die mehreren Vertiefungen 710b, bis auf die Beabstandung des ersten Teilabschnitts 708a und des zweiten Teilabschnitts 708b, durchgehend. Einfach ausgedrückt, die mehreren Vertiefungen 710b sind eine Fortsetzung der mehreren Vertiefungen 710a und vice versa, wobei die Fortsetzung durch die Beabstandung des ersten Teilabschnitts 708a und des zweiten Teilabschnitts 708b unterbrochen ist.

Figur 8 zeigt einen Ausschnitt einer Ansicht eines Schaftes 804 eines weiteren Ausführungsbeispiels eines Auswerferstiftes zum Auswerfen eines Formteiles aus einem Gießwerkzeug. Insofern ist der Schaft 804 mit dem Schaft 704 gezeigt in Figur 7 vergleichbar.

Der Schaft 804 umfasst einen ersten Teilabschnitt 808a, einen zweiten Teilabschnitt 808b und eine Rille 818. Der erste Teilabschnitt 808a und der zweite Teilabschnitt 808b sind voneinander beabstandet. Die Rille 818 ist zwischen dem ersten Teilabschnitt 808a und dem zweiten Teilabschnitt 808b angeordnet. Die Rille 818 erstreckt sich zwischen dem ersten Teilabschnitt 808a und dem zweiten Teilabschnitt 808b.

Ferner weist der Schaft 804 mindestens entlang des ersten Teilabschnitts 808a eine Vertiefung 810a und mindestens entlang des zweiten Teilabschnitts 808b eine Vertiefung 810b auf. Der erste Teilabschnitt 808a kann einem Teilabschnitt eines vorstehenden Ausführungsbeispiels entsprechen und/oder der zweite Teilabschnitt 808b kann einem Teilabschnitt eines vorstehenden Ausführungsbeispiels entsprechen.

Ferner zeigt die Figur 8 in gestrichelten Linien eine (gedankliche) Fortsetzung 824 der Vertiefung 810a und eine (gedankliche) Fortsetzung 824 der Vertiefung 810b innerhalb der Beabstandung zwischen dem ersten Teilabschnitt 808a und dem zweiten Teilabschnitt 808b. Die gedankliche Fortsetzung 824 der Vertiefung 810a ist eine stetige Fortsetzung dieser und weist dieselben Parameter wie die der Vertiefung 810a auf. Die gedankliche Fortsetzung 824 der Vertiefung 810b ist eine stetige Fortsetzung dieser und weist dieselben Parameter wie die der Vertiefung 810b auf. In einem Ausführungsbeispiel sind die Vertiefung 810a und die Vertiefung 810b jeweils helixförmig und der jeweilige Parameter umfasst mindestens eines aus Ganghöhe, Steigungswinkel, Gangwinkel, Verschiebung und Steigung. In diesem Ausführungsbeispiel sind die jeweiligen Parameter der Vertiefung 810a und der Vertiefung 810b identisch.

Die Vertiefung 810a und die Vertiefung 810b sind derart angeordnet, dass diese, bis auf die Beabstandung des ersten Teilabschnitts 808a und des zweiten Teilabschnitts 708b, ineinander übergehen. Damit sind die gestrichelten Fortsetzungen 824 im Wesentlichen deckungsgleich.

Die Rille 818 umfasst eine Vertiefung 822 gegenüber einer Urform des Schaftes 826 ohne die Rille 818. In diesem Ausführungsbeispiel ist die Vertiefung 822 im Wesentlichen konkavförmig. Die Konkavform ist im Wesentlichen eine Kreisbogenform 820, wobei die Kreisbogenform einen Radius R1 aufweist. Die Rille entspricht in einem Ausführungsbeispiel der Rille 718 in dem Ausführungsbeispiel gezeigt in Figur 7 entsprechen.

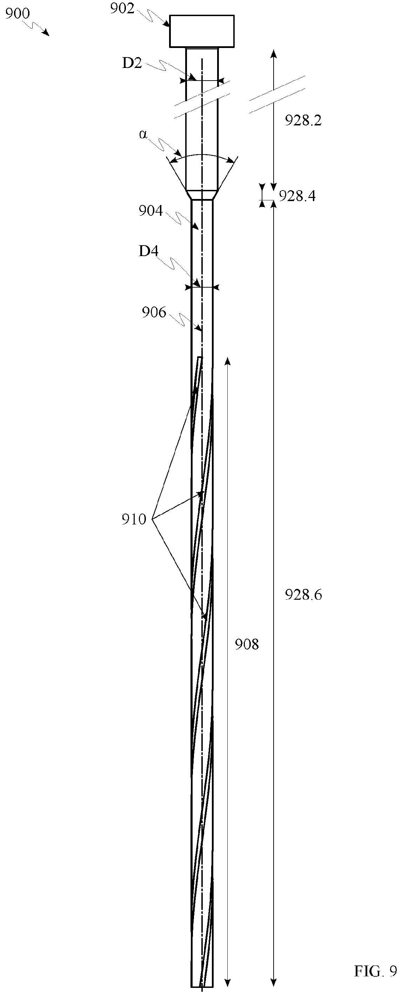

Figur 9 zeigt eine Ansicht eines weiteren Ausführungsbeispiels des Auswerferstifts 900 zum Auswerfen eines Formteiles aus einem Gießwerkzeug. Der Auswerferstift 900 umfasst einen Kopf 902, einen Schaft 904 mit einer Schaftlängsachse 906. Der Schaft 904 umfasst zwei planare Enden. Die beiden planaren Enden sind rechtwinklig zu der Schaftlängsachse 906 angeordnet. Ein erstes Ende grenzt an den Kopf 902 oder wird durch den Kopf 902 begrenzt. Das andere (zweite) Ende ist ein freies Ende. Das freie Ende kann in einem anderen Ausführungsbeispiel mit dem Formteil übereinstimmen. Das freie Ende kann in einem anderen Ausführungsbeispiel mit einer Form des Formteils im Wesentlichen übereinstimmen.

Der Schaft 904 umfasst einen ersten 928.2, zweiten 928.4 und dritten Schaftabschnitt 928.6. Der erste Schaftabschnitt 928.2 grenzt an einem Ende an das erste Ende des Schaftes und mit einem anderen Ende an ein Ende des zweiten Schaftabschnitts 928.4 an. Das andere Ende des zweiten Schaftabschnitts 928.4 grenzt an einem Ende des dritten Schaftabschnitt 928.6 an. Das andere Ende des dritten Schaftabschnitt 928.6 grenzt an dem freien Ende des Schaftes an. Einfach ausgedrückt, der erste 928.2, zweite 928.4 und dritte Schaftabschnitt 928.6 teilt den Schaft 904 entlang der Schaftlängsachse 906 auf.

Der erste Schaftabschnitt 928.2 weist eine im Wesentlichen Zylinderform und einen Durchmesser D2 auf. Der zweite Schaftabschnitt 928.4 weist eine im Wesentlichen Kegelstumpfform oder Konusform und einen Öffnungswinkel α auf. Der dritte Schaftabschnitt 928.6 weist eine im Wesentlichen Zylinderform und einen Durchmesser D4 auf. Der zweite Schaftabschnitt 928.4 ist ferner ausgelegt einen stetigen oder kontinuierlichen Übergang zwischen dem ersten Schaftabschnitt und den dritten Schaftabschnitt herzustellen.

In dem gezeigten Ausführungsbeispiel des Auswerferstifts 900 ist der Durchmesser D1 etwa 10 mm, der Durchmesser D4 etwa 6 mm.

Der dritte Schaftabschnitt 928.6 weist mindestens entlang des Teilabschnitts 908 mehrere Vertiefungen 310 auf, die sich im Wesentlichen helixförmig um die Schaftlängsachse 906 erstrecken. Die mehreren Vertiefungen 310 können mehrere Vertiefungen in einem vorstehenden Ausführungsbeispiel sein.

### Beispiele

**1.** Einen Auswerferstift zum Auswerfen eines Formteiles aus einem Gießwerkzeug, umfassend einen Schaft mit einer Schaftlängsachse, wobei
   der Schaft mindestens entlang eines Teilabschnitts eine oder mehrere Vertiefungen aufweist,
   dadurch gekennzeichnet, dass
   die eine oder mehreren Vertiefungen sich im Wesentlichen helixförmig um die Schaftlängsachse erstreckt.
**2.** Auswerferstift nach Beispiel 1, wobei die eine oder mehreren Vertiefungen mindestens einen Steigungswinkel hat.
**3.** Auswerferstift nach Beispiel 1 oder 2, wobei die eine oder mehreren Vertiefungen im Wesentlichen konkavförmig in Bezug auf einen zur Schaftlängsachse senkrecht verlaufenden Querschnitt ausgestaltet ist.
**4.** Auswerferstift nach Beispiel 3, wobei die Konkavform im Wesentlichen eine Kreisbogenform ist.
**5.** Auswerferstift nach Beispiel 4, wobei die Kreisbogenform einen Radius hat und ein Verhältnis zwischen dem Radius und einem Radius des Schaftes zwischen 4 und 26 beträgt.
**6.** Auswerferstift nach Beispiel 1 oder 2, wobei die eine oder mehreren Vertiefungen im Wesentlichen planar in Bezug auf einen zur Schaftlängsachse senkrecht verlaufenden Querschnitt ausgestaltet ist.
**7.** Auswerferstift nach einem der Beispiele 1 bis 6, wobei die eine oder mehreren Vertiefungen eine Vertiefung gegenüber einer Urform des Schaftes ohne die Vertiefung von zwischen 0,3 % und 1,0 % des Radius des Schaftes darstellt.
**8.** Auswerferstift nach einem der Beispiele 1 bis 7, wobei die eine oder mehreren Vertiefungen eine Mehrzahl an Vertiefungen ist.
**9.** Auswerferstift nach Beispiel 8, wobei die Mehrzahl an Vertiefungen eine ungerade Anzahl ist.
**10.** Auswerferstift nach Beispiel 8 oder 9, wobei die mehreren Vertiefungen einen gleichen Steigungswinkel aufweisen.
**11.** Auswerferstift nach Beispiel 8 oder 9, wobei
   mindestens eine erste Vertiefung der Mehrzahl an Vertiefungen einen ersten Steigungswinkel aufweist; und
   mindestens eine zweite Vertiefung der Mehrzahl an Vertiefungen einen zweiten Steigungswinkel aufweist.
**12.** Auswerferstift nach einem der Beispiele 1 bis 11, ferner umfassend eine reibungsarme Beschichtung des Teilabschnitts, insbesondere mit einem Reibungswert zwischen 0,1 und 0,15.
**13.** Auswerferstift nach Beispiel 12, wobei die reibungsarme Beschichtung eine amorphe Kohlenstoffschicht umfasst.
**14.** Auswerferstift nach einem der Beispiele 1 bis 13, wobei der Schaft im Wesentlichen zylinderförmig ist, insbesondere einen Durchmesser zwischen 1 mm und 20 mm aufweist.

## Patentansprüche

1. Einen Auswerferstift (100, 300, 400, 500, 600, 700, 800, 900) zum Auswerfen eines Formteiles aus einem Gießwerkzeug, wobei der Auswerferstift einen Schaft (104, 304, 404, 504, 604, 704, 804, 904) mit einer Schaftlängsachse (106, 306, 406, 706, 906) und einen Kopf (102, 302, 402, 702, 902) umfasst, wobei
der Schaft mindestens eine Vertiefung (110, 310, 410, 510, 610, 710, 810) aufweist, die sich im Wesentlichen helixförmig um die Schaftlängsachse erstreckt,
**dadurch gekennzeichnet, dass**
die mindestens eine Vertiefung mindestens entlang eines Teilabschnitts (108, 308, 408, 708, 808, 908) angebracht ist, welcher Teilabschnitt an einem von dem Kopf des Auswerferstifts abgewandten freien Ende des Schafts angrenzt.

2. Auswerferstift nach Anspruch 1, wobei die mindestens eine Vertiefung einen Steigungswinkel hat.

3. Auswerferstift nach Anspruch 1 oder 2, wobei die mindestens eine Vertiefung im Wesentlichen konkavförmig in Bezug auf einen zur Schaftlängsachse senkrecht verlaufenden Querschnitt ausgestaltet ist.

4. Auswerferstift nach Anspruch 3, wobei die Konkavform im Wesentlichen eine Kreisbogenform ist.

5. Auswerferstift nach Anspruch 4, wobei die Kreisbogenform einen Radius hat und ein Verhältnis zwischen dem Radius und einem Radius des Schaftes zwischen 4 und 26 beträgt.

6. Auswerferstift nach Anspruch 1 oder 2, wobei die mindestens eine Vertiefung im Wesentlichen planar in Bezug auf einen zur Schaftlängsachse senkrecht verlaufenden Querschnitt ausgestaltet ist.

7. Auswerferstift nach einem der Ansprüche 1 bis 6, wobei die mindestens eine Vertiefung, gegenüber einer Urform des Schaftes ohne die Vertiefung, eine Vertiefung von zwischen 0,1 % und 2,0 %, vorzugsweise zwischen 0,3 % und 1,0 %, des Radius des Schaftes darstellt.

8. Auswerferstift nach einem der Ansprüche 1 bis 7, wobei die mindestens eine Vertiefung eine Mehrzahl an Vertiefungen ist.

9. Auswerferstift nach Anspruch 8, wobei die Mehrzahl an Vertiefungen eine ungerade Anzahl ist.

10. Auswerferstift nach Anspruch 8 oder 9, wobei die mehreren Vertiefungen einen gleichen Steigungswinkel aufweisen.

11. Auswerferstift nach Anspruch 8 oder 9, wobei
mindestens eine erste Vertiefung der Mehrzahl an Vertiefungen einen ersten Steigungswinkel aufweist; und
mindestens eine zweite Vertiefung der Mehrzahl an Vertiefungen einen zweiten Steigungswinkel aufweist.

12. Auswerferstift nach einem der Ansprüche 1 bis 11, ferner umfassend eine reibungsarme Beschichtung des Teilabschnitts, insbesondere mit einem Reibungswert zwischen 0,1 und 0,15.

13. Auswerferstift nach Anspruch 12, wobei die reibungsarme Beschichtung eine amorphe Kohlenstoffschicht umfasst.

14. Auswerferstift nach einem der Ansprüche 1 bis 13, wobei der Schaft im Wesentlichen zylinderförmig ist, insbesondere einen Durchmesser zwischen 1 mm und 20 mm aufweist.
